**Europäisches Patentamt**

**European Patent Office**

**Office européen des brevets**

(19)

(11) **EP 1 571 479 A2**

(12) **EUROPEAN PATENT APPLICATION**

(43) Date of publication:
**07.09.2005 Bulletin 2005/36**

(51) Int Cl.⁷: **G02B 13/04**

(21) Application number: **05100520.5**

(22) Date of filing: **27.01.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventor: **KIM, Sung-tae**<br>**Seoul Gyeonggi-do (KR)** |
| (30) Priority: **24.02.2004 KR 2004012407** | (74) Representative: **Geary, Stuart Lloyd et al**<br>**Venner Shipley LLP**<br>**20 Little Britain**<br>**London EC1A 7DH (GB)** |
| (71) Applicant: **SAMSUNG ELECTRONICS CO., LTD.**<br>**Gyeonggi-Do 442-742 (KR)** | |

(54) **Retrofocus type projection optical system**

(57)   A rear projection optical system to enlarge and project images of an image-forming panel onto a rear side of a screen includes a front lens group disposed in a vicinity of the screen, and having first, second, and third lenses having a negative power respectively, and fourth and fifth lenses having a positive power respectively, a rear lens group disposed in a vicinity of the panel, and having a first bonding lens including a sixth lens with a positive power and a seventh lens with a negative power, a second bonding lens including an eighth lens with a negative power and a ninth lens with a positive power, and a tenth lens with a negative power, and an iris disposed between the front lens group and the rear lens group to control an amount of light. The rear projection optical system enables a wide angle-of-view (91 degrees), a high resolution, and a reduced depth of a display device.

## FIG. 2

**Description**

The present inventive relates to an optical system for a back projection apparatus, the optical system comprising first and second distinct lens groups, the first group being at the screen end of the optical system and the second group being at the light source end of the optical system.

Recently, due to demands for image apparatus having wide viewing angles and high resolution, image projection devices, which project and enlarge small images onto a large screen using a projection optical system, are rapidly spreading. In particular, rear projection devices, which project an image onto the back of a screen, are widely used as projection TVs.

Conventional rear projection devices comprise a light source, a Liquid Crystal Display (LCD) or a Digital Micromirror Device (DMD) panel to form an image using light from the light source, a screen and a projection optical system for enlarging and projecting the image onto the screen.

However, as the screen, onto which the projection optical system focuses images becomes larger, a higher resolution is required and a wider viewing angle is also required for thinner devices. A description of a conventional projection optical system is provided below.

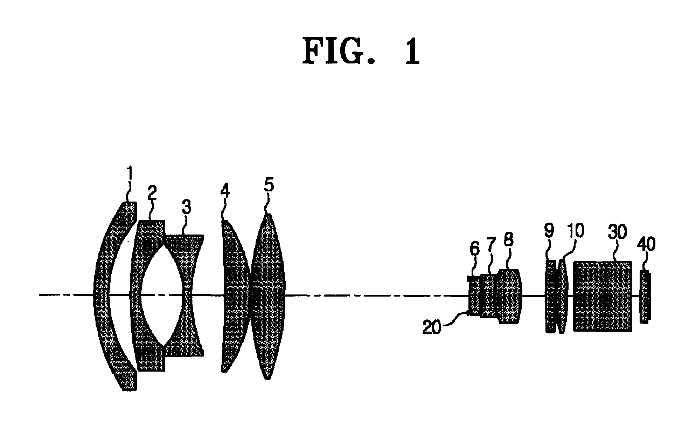

Figure 1 shows the structure of a conventional projection optical system.

Referring to Figure 1, the conventional projection optical system has a front lens group, comprising first to fifth lenses 1, 2, 3, 4, 5, with the first lens disposed nearest to a screen (not shown), a rear lens group, comprising sixth to tenth lenses 6, 7, 8, 9, 10, and an iris 20, disposed between the front lens group and the rear lens group. The rear lens group has a negative power and primarily corrects various kinds of aberration of the light from a digital micromirror display (DMD) panel 40 via a prism 30. Furthermore, the aberrations are re-compensated for due to the strong positive power of the fourth and fifth lenses 4, 5. The first lens 1 mostly compensates for distortion aberrations and the second and third lenses 2, 3 compensate for coma aberration, astigmatism and spherical aberration. The front lens group is constructed so as to have a negative power in order to widen the viewing angle.

However, since unwanted images are displayed on the screen, e.g. due to ghost images produced by the rear lens group, the conventional projection optical system has a problem in that the rear lens group must have a different curvature depending on its position. Also, since the iris 20 is disposed close to the sixth lens 6, it is difficult to insert a new iris to control an amount of light. Furthermore, the conventional projection optical system does not provide a sufficient viewing angle. Accordingly, an improved projection optical system is needed.

An optical system according to the present invention is characterised in that second lens group comprises in sequence from the light source end of the optical system: a bi-convex lens, a first doublet, comprising a positive lens followed by a negative lens, and a second doublet, comprising a negative lens followed by a positive lens.

Preferably, the positive lens of one or both of the doublets is a bi-convex lens.

Preferably, the negative lens of one or both of the doublets is a negative meniscus lens.

Preferably, one or both of the doublets are cemented elements.

According to the present invention, there is also provided a back projection display including an optical system according to the present invention.

Additional preferred and optional features of the present invention are set forth in claims 6 to 42 appended hereto.

Embodiments of the present invention will now be described, by way of example, with reference to, Figures 2 to 4 of the accompanying drawings, in which:

Figure 1 shows the structure of a conventional rear projection optical system;
Figure 2 shows the structure of a rear projection optical system according to the present general inventive concept;
Figure 3 illustrates the aberration characteristics of the rear projection optical system of Figure 2; and
Figure 4 shows a practical application of the rear projection optical system of Figure 2.

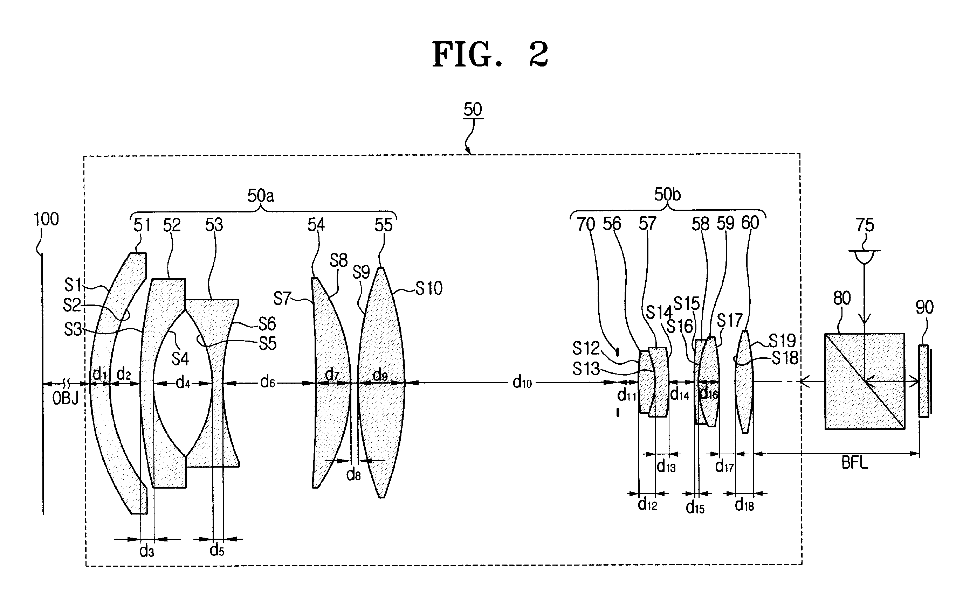

The rear projection optical system shown in Figure 2 can be used in an image projection device, such as a projection TV, employing a DMD panel.

Referring to Figure 2, the image projection device has a screen 100, a rear projection optical system 50, a lamp 75, a prism 80 and a DMD panel 90 for forming images. The rear projection optical system 50 is structured to project images, formed by the DMD panel 90 which has an effective area of 0.79" (20.1mm) onto screens having sizes in the range 46" (1168.4mm) to 56" (1422.4mm); 50" (1270mm) being considered to be a standard screen size.

The rear projection optical system 50 is structured with a front lens group 50a having five lenses 51, 52, 53, 54, 55 disposed near the screen 100, a rear lens group 50b having five lenses 56, 57, 58, 59, 60, disposed near the DMD panel 90, and an iris 70 disposed between the front lens group 50a and the rear lens group 50b for controlling the amount of light passing towards the screen. Thus, the rear projection optical system 50 includes ten lenses 51, 52, 53, 54, 55, 56, 57, 58, 59, 60 in total.

In the text below, the lenses will be referred to using the following notation. A lens will be identified by the letter L with a subscript indicating is sequential position from the screen 100. Thus, $L_1$ (51) is the lens closest to the screen and $L_3$ (53) is the third lens from the screen 100. Similarly, the lens surfaces are identified by the letter S with a subscript indicating its sequential position from the screen 100. Finally, the distances between adjacent lens surfaces are indicated by the letter d and a subscript indicating its sequential position from the screen 100.

The front lens group 50a has five lenses including the lenses $L_1$, $L_2$, $L_3$, $L_4$ and $L_5$ (51, 52, 53, 54,55). The lenses $L_1$ (51) and $L_2$ (52) have convex respective first surfaces $S_1$ and $S_3$ and concave respective second surfaces $S_2$ and $S_4$ such that the lenses $L_1$ and $L_2$ (51, 52) have negative (-) powers. The lens $L_3$ (53) has a concave first surface $S_5$ and a concave second surface $S_6$ such that the lens $L_3$ (53) has a negative power. Furthermore, the lens $L_4$ (54) has a slightly concave first surface $S_7$ and a convex second surfaces $S_8$ such that the lens $L_4$ (54) has a positive power and the lens $L_5$ (55) has convex first and second surfaces $S_9$ and $S_{10}$ such that the lens $L_5$ (55) has a positive power.

The rear lens group 50b has five lenses including the lenses $L_6$, $L_7$, $L_8$, $L_9$ and $L_{10}$ (56, 57, 58, 59, and 60). The lens $L_6$ (56) and the lens $L_7$ (57) are bonded by an ultraviolet (UV) bonding process, or the like, to form a first cemented element, and the lens $L_8$ (58) and the lens $L_9$ (59) are bonded to form a second cemented element.

The lens $L_6$ (56) of the first cemented element has convex first and second surfaces $S_{12}$ and $S_{13}$ such that the lens $L_6$ (56) has a positive power and the lens $L_7$ (57) has a concave first surface $S_{13}$ and a convex second surface $S_{14}$ such that the lens $L_7$ (57) has a negative power. The lens $L_8$ (58) of the second cemented element has a convex first surface $S_{15}$ and a concave second surface $S_{16}$ such that the lens $L_8$ (58) has a negative power and the lens $L_9$ (59) has convex first and second surfaces $S_{16}$ and $S_{17}$ such that the lens $L_9$ (59) has a positive power. Furthermore, the lens $L_{10}$ (60) has convex first and second surfaces $S_{18}$ and $S_{19}$ such that the lens $L_{10}$ (60) has a negative power.

In order that the images of the DMD panel 90 pass through the rear lens group 50b and the front lens group 50a, and are projected in sharp focus onto the screen 100, distortion reduction is performed. The lens $L_1$ (51) is a plastic aspherical lens for reducing distortion. In order to obtain a wide viewing angle, the lenses $L_1$ to $L_3$ (51, 52, 53), which are disposed near the screen 40, are configured to have a negative power and, in order to reduce an angle of light, the lens $L_4$ (54) and the lens $L_5$ (55) are configured to have a positive power. Since the lenses $L_1$ to $L_3$ (51, 52, 53) have a negative power, aberration is reduced due to a partial offset resulting from interaction among the lenses $L_1$, $L_2$ and $L_3$ (51, 52, 53).

The first and second cemented elements reduce aberrations not eliminated by the front lens group 50a. In particular, the first and second cemented elements compensate for chromatic aberration. The first and second cemented elements can be formed of FD-series and low-dispersion materials that are cheap. Furthermore, the lens $L_{10}$ (60) has a refractive power set to control the final performance correction and the angle of light incident on the DMD panel 90. The lenses (51, 52, 53, 54, 55, 56, 57, 58, 59, 60) are configured as described above so that clear images are displayed in sharp focus on the screen 100 with less distortion.

The rear projection optical system 50 satisfies Equations 1-3 as follows.

[Equation 1]

$$0.046 < \frac{|\sum_{i=6}^{7} p_i + \sum_{i=8}^{9} p_i |}{\frac{9}{\displaystyle \bigotimes_{i=6}^{} n_i v_i}} \times 1000 < 0.05$$

,

$$\frac{OBJ}{BFL} \times m = K, K \le 0.35$$

where, $p_i$, $n_i$, and $v_i$ denote a refractive power, refraction index, and dispersion of the lens $L_1$, respectively, OBJ (Object Distance) denotes a distance from the screen 100 to the lens $L_1$ (51), BFL (Back Focal Length) denotes a distance from the lens $L_{10}$ (60) to the DMD panel 90, and m denotes a magnifying power of all of the lenses (51, 52, 53, 54, 55, 56, 57, 58, 59, 60). Here, the refractive power $p_i$ is defined as the reciprocal of the focal length $f_i$.

[Equation 2]

$$1.55 < \frac{\sum_{i=6}^{7} n_i}{d_{11}} + \frac{\sum_{i=8}^{9} n_i}{d_{11}} < 1.58,$$

where, $d_{11}$ denotes a centre-line distance between the iris 70 and the lens $L_6$ (56), and $n_i$ denotes a refractive power of the lens $L_i$.

[Equation 3]

$$7.30 < \frac{\sum_{i=4}^{5} p_i}{\sum_{i=1}^{2} p_{bi}} < 7.60,$$

where, $p_i$ denotes a refractive power of the lens $L_i$, and $p_{bi}$ denotes a refractive power of the i-th cemented element.

Table 1 illustrates exemplary values for the lenses (51, 52, 53, 54, 55, 56, 57, 58, 59, 60) of the rear projection optical system 50.

Table 1]

| Surface number ($S_i$) | Curvature Radius | Thickness, distance ($d_i$) | Refractive index ($n_d$) | Dispersion ($V_d$) |
|---|---|---|---|---|
| *1 | 110.638 | 5.21 | 1.49200 | 57.1 |
| *2 | 39.691 | 10.99 | | |
| 3 | 103.871 | 2.50 | 1.65844 | 50.9 |
| 4 | 29.588 | 18.76 | | |
| 5 | -45.121 | 3.97 | 1.65844 | 50.9 |
| 6 | 45.121 | 30.36 | | |
| 7 | -822.751 | 10.00 | 1.60342 | 38.0 |
| 8 | -63.890 | 1.46 | | |
| 9 | 84.950 | 11.00 | 1.62290 | 58.1 |
| 10 | -221.455 | 75.00 | | |
| Stop | Infinity | 4.19 | | |
| 12 | 75.739 | 5.00 | 1.48749 | 70.4 |
| 13 | -22.786 | 4.50 | 1.75520 | 27.5 |
| 14 | -68.618 | 8.29 | | |
| 15 | 191.645 | 1.20 | 1.84666 | 23.8 |
| 16 | 29.267 | 6.99 | 1.48749 | 70.4 |
| 17 | -60.727 | 5.11 | | |
| 18 | 54.057 | 5.46 | 1.78472 | 25.7 |
| 19 | -74.049 | 2.90 | | |
| Prism | Infinity | 25.0 | 1.51680 | 64.2 |

Table 1] (continued)

| Surface number (S$_i$) | Curvature Radius | Thickness, distance (d$_i$) | Refractive index (n$_d$) | Dispersion (V$_d$) |
|---|---|---|---|---|
| Imager | Infinity | 0.00 | | |

The effect of the two aspherical surfaces S$_1$ and S$_2$ of the lens L$_1$ (51) can be expressed as below.

[Equation 4]

$$x = \frac{CY^2}{1+\sqrt{1-(K+1)C^2Y^2}} + aY^4 + bY^6 + cY^8 + dY^{10},$$

$$C = 1/R$$

where, Y denotes a distance from an optical axis, C denotes a curvature, and R denotes a radius. Table 2 illustrates a Conic constant and aspherical surface coefficients (a, b, c, and d) of the surfaces S$_1$ and S$_2$ of the lens L$_1$ (51).

[Table 2]

| | S$_1$ | S$_2$ |
|---|---|---|
| K | -0.848776 | -0.407388 |
| A | 0.432770E-05 | 0.120734E-05 |
| B | -0.170360E-08 | 0.218927E-09 |
| C | 0.655455E-12 | -0.435046E-11 |
| D | -0.710030E-17 | 0.148104E-14 |

Table 3 illustrates a magnifying factor, an effective focal length (EFL), an F number (F#), the distance (object distance (OBJ)) from the screen 100 to the lens L$_1$ (51), the viewing angle, also called the field of view, (FOV) and wavelengths of red, green and blue light sources.

[Table 3]

| m | EFL | F# | OBJ | FOV | R | G | B |
|---|---|---|---|---|---|---|---|
| 0.0154 | 9.6864 | 2.5 | 593mm | 91 degrees | 640mm | 550mm | 440mm |

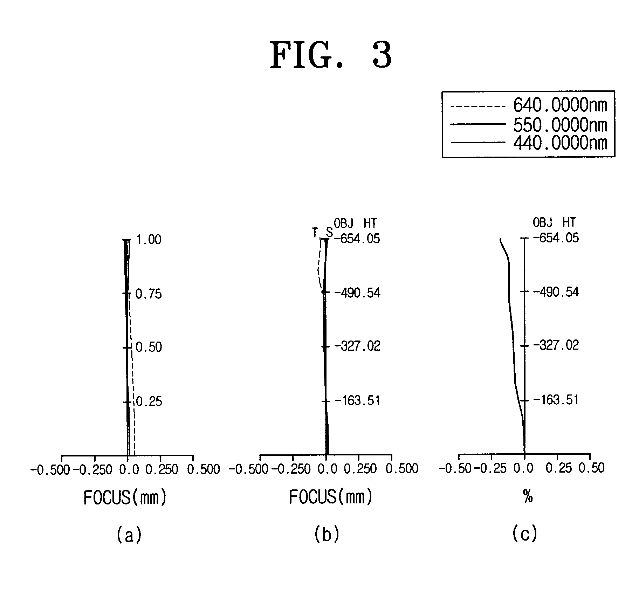

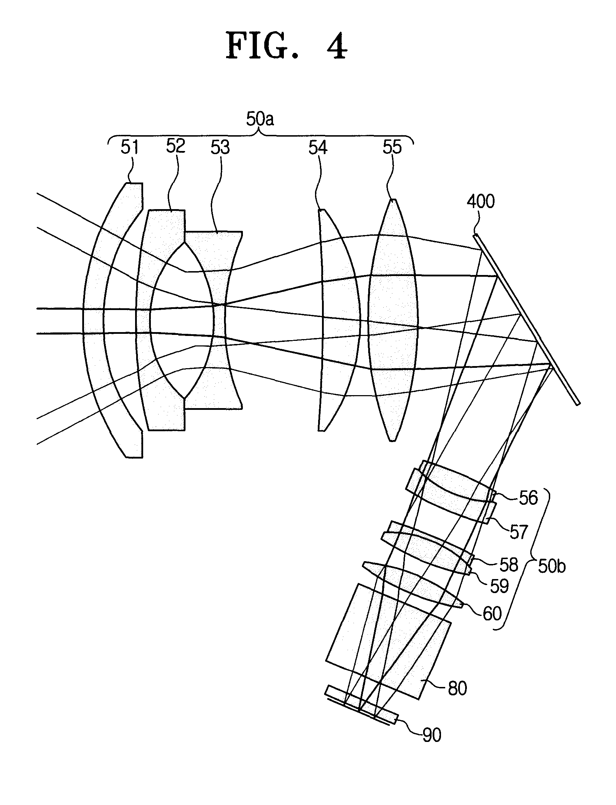

Figure 3 illustrates spherical aberration (a), astigmatism (b) and distortion (c) characteristics of the rear projection optical system 50 having the exemplary values set out above. Figure 4 illustrates how the thickness of a display device can be reduced by insertion of a mirror 400 between the front lens group 50a and the rear lens group 50b.

**Claims**

1. An optical system for a back projection apparatus, the optical system comprising first and second distinct lens groups (50a, 50b), the first group (50a) being at the screen end of the optical system (50) and the second group (50b) being at the light source end of the optical system (50), **characterised in that** second lens group (50b) comprises in sequence from the light source end of the optical system (50): a bi-convex lens (60), a first doublet (58, 59), comprising a positive lens (59) followed by a negative lens (58), and a second doublet (56, 57), comprising a negative lens (57) followed by a positive lens (56).

2. A system according to claim 1, wherein the positive lens (59, 56) of one or both of the doublets is a bi-convex lens.

3. A system according to claim 1 or 2, wherein the negative lens (57, 58) of one or both of the doublets is a negative meniscus lens.

4. A system according to claim 1, 2 or 3, wherein one or both of the doublets are cemented elements.

**5.** A back projection display including an optical system (50) according to any preceding claim.

**6.** A rear projection optical system to enlarge and project images of an image-forming panel onto a rear side of a screen, comprising:

a front lens group disposed in a vicinity of the screen, and comprising first, second, and third lenses having a negative power respectively, and fourth and fifth lenses having a positive power respectively;
a rear lens group disposed in a vicinity of the image-forming panel, and having a first bonding lens comprising a sixth lens with a positive power and a seventh lens with a negative power, a second bonding lens comprising an eighth lens with a negative power and a ninth lens with a positive power, and a tenth lens with a negative power; and
an iris disposed between the front lens group and the rear lens group to control an amount of light.

**7.** The rear projection optical system as claimed in claim 6, wherein the tenth lens has a first surface with a positive curvature and a second surface with a negative curvature, satisfying an equation as follows:

$$0.046 < \frac{|\sum_{i=6}^{7} p_i + \sum_{i=8}^{9} p_i|}{\prod_{i=6}^{9} n_i v_i} \times 1000 < 0.05 ,$$

$$\frac{OBJ}{BFL} \times m = K, K \leq 0.35$$

where, $p_i$, $n_i$, and $v_i$ denote a refractive power, refraction index, and dispersion of an i-th lens, respectively, OBJ (Object Distance) denotes a distance from the screen to the first lens, BFL (Back Focal Length) denotes a distance from the tenth lens to the panel, and m denotes a magnifying power of the entire lenses.

**8.** The rear projection optical system as claimed in claim 7, wherein the OBJ, BFL, and m are set to 593, 26.5, and 0.0154, respectively.

**9.** The rear projection optical system as claimed in claim 6, wherein the iris is disposed spaced a predetermined distance from a center of a first surface of the sixth lens, satisfying an equation as follows:

$$1.55 < \frac{\sum_{i=6}^{7} n_i}{d_{11}} + \frac{\sum_{i=8}^{9} n_i}{d_{11}} < 1.58$$

where, $d_{11}$ denotes the predetermined distance between the iris and the center of the first surface of the sixth lens, and $n_i$ denotes a refractive power of the i-th lens.

**10.** The rear projection optical system as claimed in claim 9, wherein $d_{11}$ and corresponding $n_i$ are set as follows:

$d_{11}$ = 4.19, $n_6$ = 1.48749, $n_7$ = 1.75520, $n_8$ = 1.84666, and $n_9$ = 1.48749.

**11.** The rear projection optical system as claimed in claim 6, wherein the fourth lens has first and second surfaces that respectively have a negative curvature, the fifth lens has a first surface with a positive curvature and a second surface with a negative curvature, the first bonding lens has a first surface, a bonding surface, and a second surface that have a positive curvature, a positive curvature, and a negative curvature, respectively, and an equation as

below is satisfied:

$$7.30 < \frac{\displaystyle\sum_{i=4}^{5} p_i}{\displaystyle\sum_{i=1}^{2} p_{bi}} < 7.60 \,,$$

where, $p_i$ denotes a refractive power of the i-th lens, and $p_{bi}$ denotes a refractive power of the i-th bonding lens.

12. The rear projection optical system as claimed in claim 6, wherein the sixth and seventh lenses are bonded by ultraviolet bonding to form the first bonding lens, and the eighth and ninth lenses are bonded by ultraviolet bonding to form the second bonding lens.

13. The rear projection optical system as claimed in claim 6, wherein the first lens in an aspheric lens.

14. A display apparatus having an image forming panel to form images, a screen, and a projection optical system to enlarge the images and display the images on the screen, the projection optical system comprising:

    a front lens group disposed near the screen and comprising first, second, third, fourth, and fifth lenses; and
    a rear lens group disposed near the image forming panel comprising:

    a sixth lens and a seventh lens bonded together,
    an eighth lens and a ninth lens bonded together, and
    a tenth lens.

15. The display apparatus as claimed in claim 14, wherein the projection optical system further comprises an iris disposed in between the front lens group and the rear lens group to control an amount of light.

16. The display apparatus as claimed in claim 14, wherein the first, second, third, seventh, eighth, and tenth lenses are diverging lenses, and the fourth, fifth, sixth, and ninth lenses are converging lenses.

17. The display apparatus as claimed in claim 14, wherein the first lens is an aspheric lens.

18. The display apparatus as claimed in claim 14, wherein the sixth and seventh lenses are bonded by ultraviolet bonding, and the eighth and ninth lenses are bonded by ultraviolet bonding.

19. The display apparatus as claimed in claim 18, wherein the sixth, seventh, eighth, and ninth lenses are formed of FD-series and low dispersion materials.

20. The display apparatus as claimed in claim 14, wherein the projection optical system further comprises a mirror, the rear lens group is disposed below the front lens group, and the images of the image forming panel are passed through the rear lens group and reflected from the mirror to the front lens group.

21. A projection optical system usable with a display apparatus having an image-forming panel to form images and a screen to display the images thereon, comprising:

    a first lens group disposed along a focal path near the screen including a plurality of lenses to enlarge and project the images of the image-forming panel onto the screen; and
    a second lens group disposed along the focal path near the image-forming panel, and including a first set of bonded lenses and a second set of bonded lenses.

22. The projection optical system as claimed in claim 21, wherein the first and second set of bonded lenses each comprise two lenses bonded together by ultraviolet bonding.

23. The projection optical system as claimed in claim 22, wherein one of the two lenses in each of the first and second set of bonded lenses has a positive power, and the other one of the two lenses of the first and second set of bonded lenses has a negative power.

24. The projection optical system as claimed in claim 21, wherein the first and second set of bonded lenses reduce aberrations of the images projected through the plurality of lenses.

25. The projection optical system as claimed in claim 24, wherein the first and second set of bonded lenses compensate for chromatic aberrations of the images projected through the plurality of lenses.

26. The projection optical system as claimed in claim 21, wherein the first and second set of bonded lenses are disposed near a rear end of the focal path.

27. A display apparatus comprising:

   an image forming panel to form images;
   a screen to display the images thereon;
   a plurality of rear lenses disposed near the image forming panel, and
   including a first set of bonded lenses and a second set of bonded lenses; and
   a plurality of front lenses disposed near the screen,

   wherein the images are projected along a focal path from the image forming panel through the plurality of rear lenses and the plurality of front lenses to the screen, and a position of the plurality of rear lenses with respect to the plurality of front lenses can be adjusted.

28. The display apparatus as claimed in claim 27, wherein the position of the plurality of rear lenses is determined according to a depth of the display apparatus.

29. The display apparatus as claimed in claim 28, wherein the plurality of rear lenses is disposed below the plurality of front lenses to reduce the depth of the display apparatus.

30. The display apparatus as claimed in claim 29, further comprising a mirror disposed in the focal path between the plurality of rear lenses and the plurality of front lenses, and angularly positioned to reflect the images projected through the plurality of rear lenses to the plurality of front lenses.

31. The display apparatus as claimed in claim 27, wherein the position of the plurality of rear lenses is determined according to a width of the screen.

32. The display apparatus as claimed in claim 27, wherein the position of the plurality of rear lenses is determined according to an aberration of the images projected through the plurality of rear lenses and the plurality of front lenses.

33. The display apparatus as claimed in claim 27, wherein the position of the plurality of rear lenses in determined according a resolution quality of the images.

34. The display apparatus as claimed in claim 27, further comprising an iris disposed in the focal path between the plurality of rear lenses and the plurality of front lenses, and a predetermined distance from the plurality of rear lenses to control an amount of light.

35. A projection optical system to project light onto a screen, comprising:

   a front lens group including a plurality of negative powered lenses reducing distortion and aberrations of the light, and a plurality of positive powered lenses reducing an angle of the light; and
   a rear lens group including first and second bonding lenses reducing aberrations of the light not eliminated by the front lens group, and a refractive lens to control a final performance correction and an angle of the light.

36. The projection optical system as claimed in claim 35, wherein the plurality of negative powered lenses reduce the aberrations of the light according to interactions among the plurality of negative powered lenses.

**37.** The projection optical system as claimed in claim 35, wherein at least one of the plurality of negative powered lenses is an aspheric lens.

**38.** The projection optical system as claimed in claim 35, wherein the first and second bonding lenses compensate for chromatic aberrations of the light.

**39.** The projection optical system as claimed in claim 35, wherein the first and second bonding lenses each comprises two lenses bonded together by ultraviolet bonding.

**40.** The projection optical system as claimed in claim 39, wherein one of the two lenses of each of the first and second bonding lenses is a positive powered lens, and the other one of the two lenses of each of the first and second bonding lenses is a negative powered lens.

**41.** The projection optical system as claimed in claim 35, wherein the refractive lens is a negative powered lens.

**42.** The projection optical system as claimed in claim 35, further comprising an iris disposed between the front lens group and the rear lens group, and a predetermined distance from the rear lens group to control an amount of the light.

# FIG. 1

# FIG. 2

EP 1 571 479 A2

EP 1 571 479 A2

# FIG. 3

| | |
|---|---|
| -------- | 640.0000nm |
| ———— | 550.0000nm |
| —— | 440.0000nm |

(a)

1.00

0.75

0.50

0.25

-0.500 -0.250 0.0 0.250 0.500

FOCUS(mm)

(b)

OBJ HT

T S -654.05

-490.54

-327.02

-163.51

-0.500 -0.250 0.0 0.250 0.500

FOCUS(mm)

(c)

OBJ HT

-654.05

-490.54

-327.02

-163.51

-0.50 -0.25 0.0 0.25 0.50

%

12

# FIG. 4